# EUROPEAN PATENT APPLICATION

(11) **EP 4 163 861 A1**
(43) Date of publication of application: **12.04.2023**
(21) Application number: 21821167.0
(22) Date of filing: 09.06.2021
(51) Int. Cl.: G06Q 50/04

(54) **DEVICE AND METHOD FOR ASSISTING SUBCONTRACTING OF MANUFACTURE OF COMPONENT TO FABRICATOR, AND PROGRAM FOR SAME**

(30) Priority: 09.06.2020 JP 2020099980
(71) Applicant: Caddi, Inc., Tokyo, 111-0511 (JP)
(72) Inventor: KATO Yushiro, Tokyo 111-0051 (JP)
(74) Representative: Hoffmann Eitle
(86) International application number: PCT/JP2021/022006
(87) International publication number: WO 2021/251443

(57) **Abstract**

A method for assisting manufacturing outsourcing from a manufacturer to a processor of a component reduces a burden of confirming whether content described in two-dimensional data, which expresses the component in a two-dimensional manner, correctly represents intention of a manufacturer. Two-dimensional data of a component as a processing target is transmitted from a manufacturer terminal 120 to a device 110 (S201). After receiving the two-dimensional data, the device 110 performs an analysis of the two-dimensional data (S202). Designation information included in the two-dimensional data is extracted, and outsourcing requirements for the component expressed by the two-dimensional data are determined. The device 110 acquires an estimated price of the component expressed by the two-dimensional data. Subsequently, the device 110 transmits the determined outsourcing requirements and the calculated estimated price to the manufacturer terminal 120 (S203). In a case of determining ordering at the received estimated price, the manufacturer transmits an ordering instruction to the device 110 (S204). The device 110 transmits order receipt confirmation to a processor terminal 131 (S205).

## Description

### TECHNICAL FIELD

The present invention relates to a device, a method, and a computer program for assisting manufacturing outsourcing of a component to a processor.

### BACKGROUND ART

A design assisting tool enabling technical drawing to be digitally performed, which is called Computer Aided Design (CAD), has been used. Types of the CAD include a two-dimensional CAD (2D-CAD) for expressing a three-dimensional object in a two-dimensional manner and a three-dimensional CAD (3D-CAD) for expressing a three-dimensional object in a three-dimensional manner. Introduction rates thereof vary with industries and countries, whereas a usage rate of the 2D-CAD in drawing is not low.

### CITATION LIST

### Patent Literature

Patent Literature 1: Japanese Patent No. 6462945

### SUMMARY OF INVENTION

### Problem to be Solved by the Invention

A processor who processes a product or a component of the product on the basis of data of 2D-CAD naturally requires the data, but, in some cases, cannot receive required data from a manufacturer who orders manufacture of the product or the component.

For example, even if CAD data in DXF format, which is a standard of 2D-CAD, is used at a design stage by the manufacturer, only document data in PDF format, which is not compatible with 2D-CAD, is provided to the outside in some cases. In such a case, the processor needs to create CAD data from the received document data. It is not uncommon that the document data includes unclear description or incorrect description, and in such a case, a burden is incurred in confirming correct specifications with the manufacturer. If processing is performed without confirming correct specifications, inconsistency in recognition between the processor and the manufacturer may later be found from an occurrence of a quality defect, resulting in greater burdens.

Also, even in a case where 2D-CAD data compatible with 2D-CAD can be received, it is not uncommon that dimension lines are not connected to each other or incorrect points are present, so that a burden is incurred on the processor in confirming correct specifications with the manufacturer and correcting the CAD data. In a case when the CAD data and the document data are received, there may be inconsistency between the CAD data and the document data.

In a course of the applicant providing a service that enables a manufacturer to streamline the selection of a processor when outsourcing manufacture of a component to the processor (refer to Patent Literature 1), the inventors have found that data expressing two-dimensionally a component as a processing target, such as 2D-CAD data or PDF data, (hereinafter referred to as "two-dimensional data") have the problems described above. More specifically, the inventors have found a problem whether content described in the two-dimensional data correctly represents intention of the manufacturer. Confirming whether the intention of the manufacturer is conveyed to the processor is used as a transaction cost for the manufacturer in selecting a new processor.

The present invention is made in view of such problems above, and aims at reducing the burden of confirming whether the content described in the two-dimensional data expressing the component correctly represents the intention of the manufacturer by a device, a method, and a computer program for assisting manufacturing outsourcing from a manufacturer to a processor of a component.

Note that, in the present specification, a term of "component" encompasses an assembly product constituted by a plurality of components, and a term of "processing" encompasses assembly of a plurality of components.

### Means for Solving Problem

For implementing such aims described above, the first aspect according to the present invention is a method for assisting manufacturing outsourcing from a manufacturer to a processor of a component. The method includes: a step of receiving, from a manufacturer terminal, two-dimensional data expressing the component in a two-dimensional manner; a step of extracting designation information from the two-dimensional data; a step of determining outsourcing requirements corresponding to the designation information; and a step of adding, to the two-dimensional data, additional data corresponding to at least part of the outsourcing requirements.

The second aspect of the present invention is the method according to the first aspect, wherein the extracting is performed by character recognition using OCR.

The third aspect of the present invention is the method according to the first aspect, and further includes a step of acquiring an estimated price for performing processing under at least part of the outsourcing requirements.

The fourth aspect of the present invention is the method according to any one of the first to third aspects, wherein the determining is performed by making reference to a correspondence between the designation information included in the two-dimensional data and interpretation of the designation information.

The fifth aspect of the present invention is the method according to the fourth aspect, wherein the correspondence is a correspondence for each manufacturer.

The sixth aspect of the present invention is the method according to the fourth aspect, wherein the correspondence is a correspondence common to at least part of manufacturers.

The seventh aspect of the present invention is the method according to the fourth aspect, wherein, in the correspondence, at least any piece of the designation information included in the two-dimensional data is associated with a specific interpretation out of a plurality of possible interpretations.

The eighth aspect of the present invention is the method according to the first aspect, wherein the additional data is data for displaying visual expression of at least part of the outsourcing requirements.

The ninth aspect of the present invention is a computer program for causing a computer to perform a method for assisting manufacturing outsourcing from a manufacturer to a processor of a component. The method includes: a step of receiving, from a manufacturer terminal, two-dimensional data expressing the component in a two-dimensional manner; a step of extracting designation information from the two-dimensional data; a step of determining outsourcing requirements corresponding to the designation information; and a step of adding, to the two-dimensional data, additional data corresponding to at least part of the outsourcing requirements.

The tenth aspect of the present invention is a device for assisting manufacturing outsourcing from a manufacturer to a processor of a component. The device is configured to: receive, from a manufacturer terminal, two-dimensional data expressing the component in a two-dimensional manner and extract designation information from the two-dimensional data; determine outsourcing requirements corresponding to the designation information; and add, to the two-dimensional data, additional data corresponding to at least part of the outsourcing requirements.

According to one aspect of the present invention, by extracting the designation information from the received two-dimensional data and determining the outsourcing requirements corresponding to the designation information, it is possible to reduce a burden of confirming, with the manufacturer, whether the content described in the document data expressing the component as a processing target correctly represents the intention of the manufacturer. This contributes to prevention of a quality defect without increasing man-hours.

### BRIEF DESCRIPTION OF DRAWINGS

FIG. 1 is a diagram illustrating a system for assisting manufacturing outsourcing of a component to a processor according to an embodiment of the present invention;

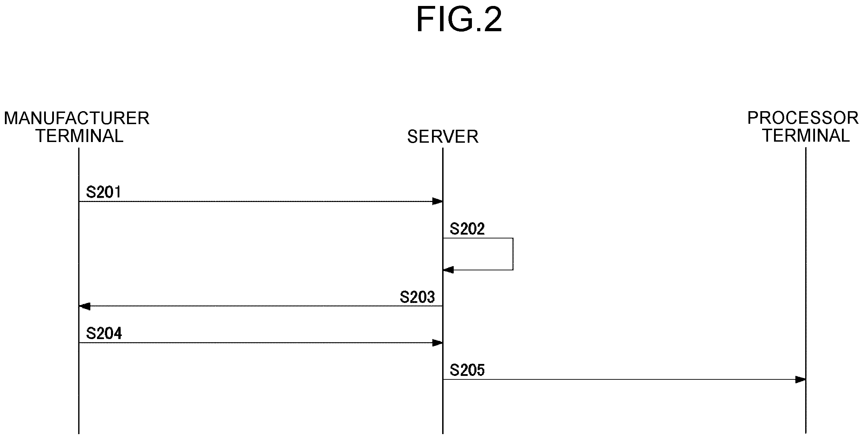

FIG. 2 is a flowchart of a method for assisting manufacturing outsourcing of a component to the processor according to the embodiment of the present invention;
FIG. 3 is an example of a drawing displayed as two-dimensional data received in the embodiment of the present invention;
FIG. 4 is a diagram illustrating an example of a drawing displayed as two-dimensional data including additional data according to the embodiment of the present invention;
FIG. 5 is another example of a drawing displayed as two-dimensional data received in the embodiment of the present invention; and
FIG. 6 is a diagram illustrating an example of visual expression of outsourcing requirements that are determined by making reference to an interpretation common to manufacturers according to the embodiment of the present invention.

### DESCRIPTION OF EMBODIMENTS

The following describes an embodiment of the present invention in detail with reference to the drawings.

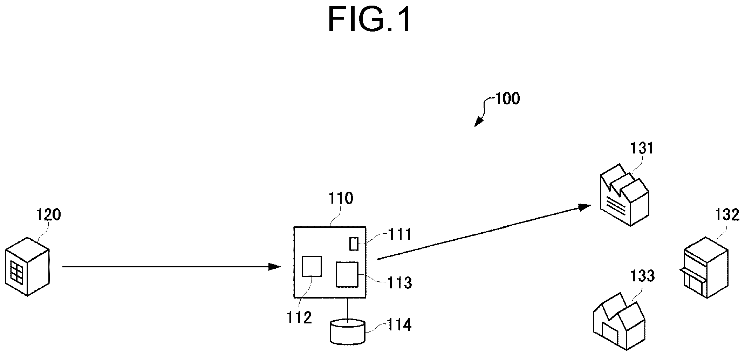

FIG. 1 illustrates a system for assisting manufacturing outsourcing of a component to a processor by a manufacturer according to the embodiment of the present invention. A system 100 includes a device 110 of an intermediary trader intervening between the manufacturer and one or more processors, a manufacturer terminal 120 that transmits two-dimensional data of a component as a processing target to the device 110, and a processor terminal 131 that receives order receipt confirmation related to processing of the component from the device 110.

The device 110 includes a communication unit 111 such as a communication interface, a processing unit 112 such as a processor and a CPU, and a storage unit 113 including a storage device such as a memory and a hard disk or a storage medium. The device 110 can be configured to execute a computer program for performing each piece of processing by the processing unit 112, and may include one or more devices or servers. The computer program may include one or more computer programs, and may be recorded in a computer-readable storage medium to be a non-transitory computer program product.

The device 110 may include, in addition to the storage unit 113, a database 114 that the device 110 can access. For example, the device 110 may store, in the database 114, data to be added to the received drawing data in order for the received drawing data to correctly represent the intention of the manufacturer. The following describes the device 110 that is assumed to include the database 114 separately from the storage unit 113. Alternatively, data to be stored in the database 114 may be stored in the storage unit 113, or vice versa.

In FIG. 1, the manufacturer terminal 120, a first processor terminal 131, a second processor terminal 132, and a third processor terminal 133 are depicted by illustrations representing respective companies. However, more accurately, those illustrations correspond to computers used in the respective companies. FIG. 1 illustrates the second processor terminal 132 and the third processor terminal 133 in addition to the first processor terminal 131, whereas the first processor terminal 131 may be simply referred to as the processor terminal 131 in some cases. The manufacturer terminal 120 and the processor terminal 131 each include a communication unit, a processing unit, and a storage unit similarly to the device 110, but they are not depicted for simplification.

In the present embodiment, the device 110 is assumed to be able to communicate with the processor terminal 131 over a computer network including an IP network. The device 110 may exchange required data with the processor terminal 131 by manually using a communication module such as FAX by a person.

First, the manufacturer that performs manufacturing outsourcing transmits two-dimensional data of a component as a processing target from the manufacturer terminal 120 to the device 110 (S201). As the two-dimensional data, for example, document data in PDF format and 2D-CAD data in DXF format can be exemplified. The 2D-CAD data can be obtained by outputting a drawing drawn by 3D-CAD as a plurality of two-dimensional drawings, and at this point, the drawings can be output in PDF format or DXF format. After output of the drawings as 2D-CAD data in DXF format, designation information (described later) may be written by using 2D-CAD.
Moreover, the 2D-CAD data can be output as a drawing in PDF format. The device 110 may also receive, as ordering requirements, various requirements such as the number of products, a material, a tolerance, a quality standard, a delivery date, a delivery destination, a packing type, necessity of an article slip, and so forth required by the manufacturer in addition to the two-dimensional data.

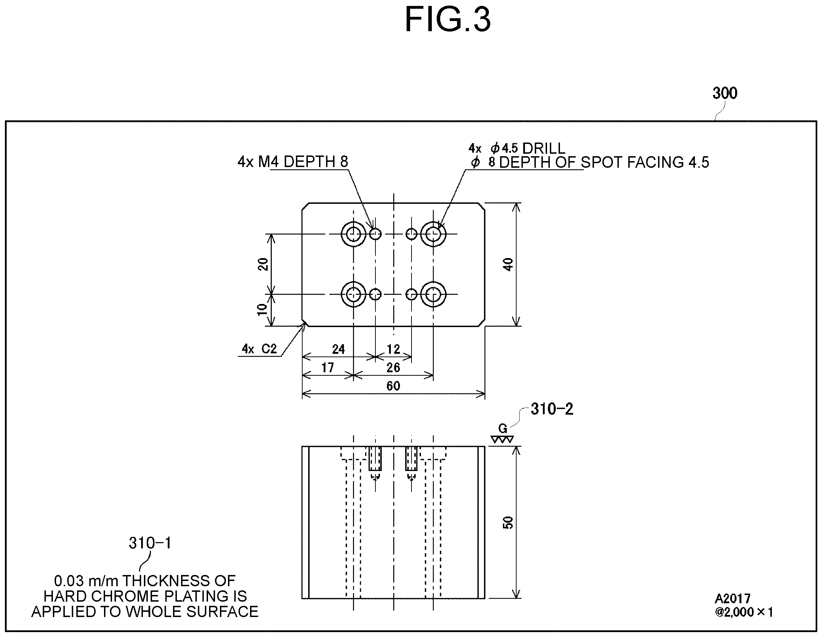

FIG. 3 illustrates an example of a drawing displayed as two-dimensional data received by the device 110. In addition to a shape and dimensions of the component as the processing target, a drawing 300 may include designation information such as other specifications and a manufacturing method for implementing the specifications. In the example of FIG. 3, "0.03 m/m thickness of hard chrome plating is applied to whole surface" as first designation 310-1 and "G" related to grinder processing, that is, roughness as second designation 310-2, are included as the designation information.

After receiving the two-dimensional data, the device 110 analyzes the two-dimensional data (S202). Although details about the analysis will be described later, the designation information included in the two-dimensional data is extracted, and outsourcing requirements for the component expressed by the two-dimensional data are determined in accordance with the extracted designation information. The extraction can be performed by using a method such as, for example, character recognition by OCR, image recognition, or the like.

Simultaneously with or after the determination of the outsourcing requirements, the device 110 may acquire an estimated price of the component expressed by the two-dimensional data. The estimated price can be acquired by various methods, which include calculating the estimated price on the basis of the two-dimensional data by the device 110, or inputting a price that is calculated by an employee of a business operator providing the device 110 on the basis of the two-dimensional data. The estimated price may vary with the ordering requirements and the outsourcing requirements, so that the estimated price is preferably a price for performing processing under at least one of the received ordering requirements and the determined outsourcing requirements. Some items of the ordering requirements and the outsourcing requirements may overlap with each other. In this case, priority between such overlapping items may be appropriately determined in advance.

As one example, the estimated price may be a price obtained by adding a profit of the entrepreneur providing the device 110 as an intermediary trader to a sales price of the component of an existing or imaginary processor. The device 110 can calculate a sales price of each processor and can calculate the estimated price of the intermediary trader accordingly, by holding an amount of profit of itself in the database and holding various unit costs for calculating the sales price of the component of the processor. The estimated price may be the sales price of the processor in accordance with a form of transaction that is performed via the device 110. In any case, the device 110 can calculate the estimated price of the component by making reference to the price information stored in the database 114. Herein, a sales price of an imaginary processor is exemplified by a price that is calculated on the basis of at least part of sales prices calculated for a plurality of existing processors.

In addition, the device 110 may determine a capability of processing of the component expressed by the two-dimensional data, simultaneously with, or before or after the determination of the outsourcing requirements. The determination includes specification of one or more shapes and dimensions thereof required for processing the component, and a position, a thickness, a diameter, an angle, and the like of the shape may be further specified. Based on shape data that is specified as described above, the device 110 determines whether the component can be processed by a processing method that each processor can handle, or whether the component can be processed in a facility that is available to each processor. At this time, a determination of whether the component can be processed under the outsourcing requirements determined as described above may be further performed.

After analyzing the two-dimensional data, the device 110 transmits, to the manufacturer terminal 120, the calculated estimated price together with the determined outsourcing requirements (S203). When the manufacturer decides to order at the estimated price received in the terminal 120, the manufacturer transmits an ordering instruction to the device 110 (S204). The intermediary trader providing the device 110 transmits order receipt confirmation to one or more the processor terminals 131 (S205). Herein, the intermediary trader may confirm the order receipt at a stage of receiving the ordering instruction, or may confirm the order receipt of itself after order receipt by another processor is confirmed. Ordering and order receipt may be directly confirmed by the manufacturer and the processor in accordance with a form of transaction performed via the device 110. Moreover, order of transmission of the estimated price, transmission of the ordering instruction, and transmission of the order receipt confirmation may vary with a form of transaction performed via the device 110.

Simultaneously with, or before or after the transmission of the order receipt confirmation to the processor terminal 131, the device 110 adds, to the two-dimensional data, additional data corresponding to at least part of the determined outsourcing requirements and transmits, to the processor terminal 131, the two-dimensional data to which the additional data is added.

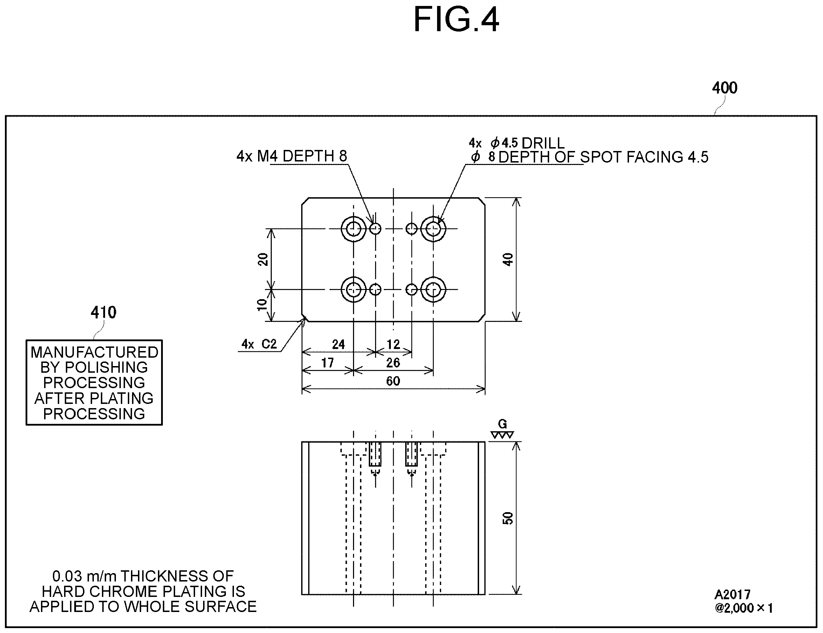

FIG. 4 illustrates an example of a drawing displayed as the two-dimensional data including the additional data. In a case where plating is designated like the first designation 310-1, the second designation 310-2 of "G" relative to roughness is intended to designate "polishing processing after plating" for a manufacturer. Such interpretation of the designation information has been stored in the database 114 for each manufacturer or in common between manufacturers. The outsourcing requirements corresponding to the designation information are determined by making reference to a correspondence between the designation information included in the two-dimensional data and the interpretation thereof on the basis of the designation information included in the two-dimensional data. Additional data corresponding to the determined outsourcing requirements is added to the two-dimensional data. A stamp 410 is displayed in a drawing 400 as an example of visual expression of the outsourcing requirements by the additional data. The database 114 may also store interpretation of the designation information for each processor.

In this way, the device 110 extracts the designation information from the received two-dimensional data and determines the outsourcing requirements corresponding to the designation information by making reference to interpretation of the designation information for each manufacturer or an interpretation thereof common to manufacturers on the basis of the designation information. The determination includes a determination of specific outsourcing requirements in a case where there is no explicit designation. By the determination of the outsourcing requirements, the device 110 does not unnecessarily confirm the intention of the manufacturer, and thereby can easily present the estimated price. By transmitting, to the processor, the two-dimensional data that correctly reflects the intention of the manufacturer, misinterpretation by the processor can be reduced.

Note that, in the present specification, unless "only" is stated, as in "on the basis of only xx", "in accordance with only xx", or "in a case of only xx", additional information may also be considered. Additionally, by way of example, description of "b is performed in a case of a" does not necessarily mean "b is always performed in a case of a" or "b is performed immediately after a" unless otherwise specified. Description of "each a constituting A" does not necessarily mean that A is constituted of a plurality of constituent elements, and encompasses a single constituent element.

By way of caution, even if any of a method, a computer program, a terminal, a device, a server, or a system (hereinafter, referred to as "method and the like") has an aspect of performing operation different from the operation described in the present specification, aspects of the present invention encompass the same operation as any of the operations described in the present specification, and the method and the like are not caused to be outside the range of the aspects of the present invention even if the operation different from the operation described in the present specification is present.

### Details of two-dimensional data analysis

In the example of FIG. 3, the outsourcing requirements agreeing with the intention of the manufacturer are determined by making reference to the interpretation of the designation information for each manufacturer, and ambiguity of description in the two-dimensional data received by the device 110 is reduced. As similar designation information, by way of example, in a case where stainless steel is designated as a material, it is possible to determine that processing is performed with a specific material such as, for example, SUS304 by making reference to the interpretation for each manufacturer. In this way, in a case where a plurality of interpretations exists for a piece of the designation information that may be included in the two-dimensional data, a specific interpretation out of the interpretations is associated with the designation information to obtain clearness.

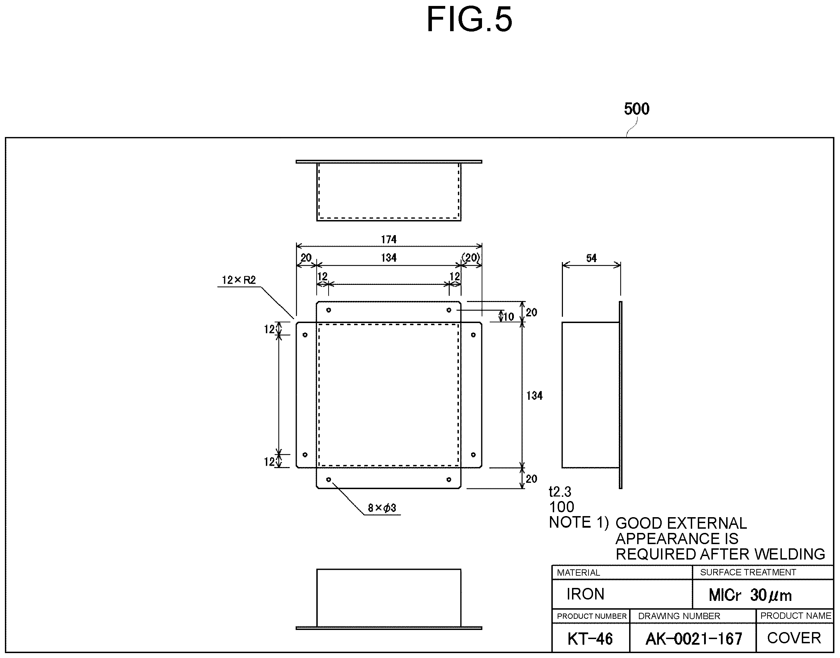

In the example of FIG. 5, iron is designated as a material. Typically, iron has a large number of subdivided types, and thus the type is not uniquely determined. In a case where a certain manufacturer has a practice that description of "iron" in a drawing is interpreted as "SPCC", the intention of the manufacturer can be correctly confirmed by storing the custom as a correspondence between the designation information and the interpretation for the manufacturer. Designation of "MICr" depicted in FIG. 5 may be used as expression indicating "hard chrome plating". However, this is not necessarily typical expression, so that, for a manufacturer using such expression, the designation can be stored as a correspondence for the manufacturer. Designation of "good external appearance is required after welding" in FIG. 5 represents designation of a requirement for causing external appearance to be fine in view of external appearance after performing welding. However, there is no industry standard of required quality, and estimated standards are different among manufacturers. Thus, in a case where such designation is made, it is required to determine, as the outsourcing requirement, a standard such as "special processing is not actually required, and it is sufficient to finish external appearance by shaving with a grinder" for each manufacturer. As illustrated in the example of FIG. 5 in addition to the example of FIG. 3, the two-dimensional data often includes ambiguous designation, so that it is significant to reduce ambiguity using a correspondence for each manufacturer.

In a case of some manufacturer, a drawing not including welding may include designation information such as "welding should be full-circled welding". Such designation information can be determined not to be included in the outsourcing requirements, and can be canceled.

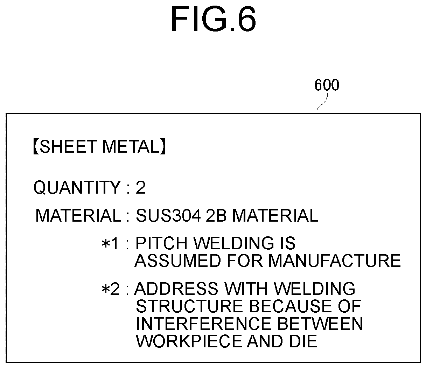

In a case where stainless steel is designated as a material, it may be determined to perform processing with a specific material, such as SUS304, among a plurality of possible options as a material that can be handled by a large number of processors, or a material the processing cost of which is low. The determination can be performed by making reference to the interpretation of the designation information common to manufacturers stored in the database 114, by way of example. As similar designation information, in a case where there is no designation of a welding method, it is possible to determine to perform processing by a specific welding method such as pitch welding. That is, in a case where no designation information is described in the two-dimensional data, a specific outsourcing requirement may be determined. Additionally, in a case where only "welding" is designated and a specific method therefor, for example, full-circled welding or intermittent welding, is not designated, it may be determined to perform processing by a specific welding method among a plurality of possible options. In a case where a plurality of interpretations can be made for the designation information included in the two-dimensional data, or in a case where the designation information is not clearly described, determination of a specific outsourcing requirement improves accuracy of the estimated price. FIG. 6 illustrates an example of visual expression 600 of the outsourcing requirements that are determined by making reference to the interpretation common to manufacturers in a case where stainless steel is described as the designation information and welding is not clearly described.

The two-dimensional data received by the device 110 may include designation information that is unavailable for a service provided by the device 110. In such a case, it is possible to transmit a message of the unavailability to the manufacturer terminal 120. However, by determining outsourcing requirements in a range that can be handled to transmit an estimated amount, or determining outsourcing requirements for steps excluding the unavailable step to transmit an estimated amount, it is possible to encourage the manufacturer to examine ordering without unnecessarily increasing a burden thereon.

### EXPLANATIONS OF LETTERS OR NUMERALS

100: system
110: intermediary trader device
120: manufacturer terminal
131: first processor terminal
132: second processor terminal
133: third processor terminal
300: drawing
400: stamped drawing
500: drawing
600: stamp

## Claims

1. A method for assisting manufacturing outsourcing from a manufacturer to a processor of a component, the method comprising:
a step of receiving, from a manufacturer terminal, two-dimensional data expressing the component in a two-dimensional manner;
a step of extracting designation information from the two-dimensional data;
a step of determining outsourcing requirements corresponding to the designation information; and
a step of adding, to the two-dimensional data, additional data corresponding to at least part of the outsourcing requirements.

2. The method according to claim 1, wherein the extracting is performed by character recognition using OCR.

3. The method according to claim 1, further comprising a step of acquiring an estimated price for performing processing under at least part of the outsourcing requirements.

4. The method according to any one of claims 1 to 3, wherein the determining is performed by making reference to a correspondence between the designation information included in the two-dimensional data and interpretation of the designation information.

5. The method according to claim 4, wherein the correspondence is a correspondence for each manufacturer.

6. The method according to claim 4, wherein the correspondence is a correspondence common to at least part of manufacturers.

7. The method according to claim 4, wherein, in the correspondence, at least any piece of the designation information included in the two-dimensional data is associated with a specific interpretation out of a plurality of possible interpretations.

8. The method according to claim 1, wherein the additional data is data for displaying visual expression of at least part of the outsourcing requirements.

9. A computer program for causing a computer to perform a method for assisting manufacturing outsourcing from a manufacturer to a processor of a component, wherein the method comprises:
a step of receiving, from a manufacturer terminal, two-dimensional data expressing the component in a two-dimensional manner;
a step of extracting designation information from the two-dimensional data;
a step of determining outsourcing requirements corresponding to the designation information; and
a step of adding, to the two-dimensional data, additional data corresponding to at least part of the outsourcing requirements.

10. A device for assisting manufacturing outsourcing from a manufacturer to a processor of a component, the device being configured to:
receive, from a manufacturer terminal, two-dimensional data expressing the component in a two-dimensional manner and extract designation information from the two-dimensional data;
determine outsourcing requirements corresponding to the designation information; and
add, to the two-dimensional data, additional data corresponding to at least part of the outsourcing requirements.
